# EUROPÄISCHE PATENTANMELDUNG

(11) **EP 0 809 978 A2**
(43) Veröffentlichungstag der Anmeldung: **03.12.1997**
(21) Anmeldenummer: 97104175.1
(22) Anmeldetag: 12.03.1997
(51) Int. Cl.: A61C 5/02, A61C 19/00

(54) **Spendervorrichtung**

(30) Priorität: 31.05.1996 DE 19622034
(71) Anmelder: Vereinigte Dentalwerke Antaeos Beutelrock Zipperer Zdarsky Ehrler GmbH & Co. KG, 81737 München (DE)
(72) Erfinder: Zdarsky, Constantin, West Palm Beach, Florida 33407 (US)
(74) Vertreter: WILHELMS, KILIAN & PARTNER Patentanwälte

(57) **Zusammenfassung**

Spendervorrichtung für Markierungsscheiben 3 zum Begrenzen der Eindringtiefe von Zahnwurzelkanalaufbereitungsinstrumenten. Die Spendervorrichtung besteht aus einer Basisfolie 1 aus einem Kunststoffmaterial, das eine derartige Festigkeit hat, daß die Basisfolie 1 von einem Zahnwurzelkanalaufbereitungsinstrument durchstoßen werden kann. In der Basisfolie 1 sind tiefgezogene Aufnahmen 2 für die Markierungsscheiben 3 ausgebildet und zwar derart, daß die Markierungsscheiben 3 in den Aufnahmen 2 in einer zur Basisfolie 1 parallelen Ebene liegend aufgenommen sind. Über der Basisfolie 1 und mit dieser verbunden ist eine Abziehfolie 4 vorgesehen, die insbesondere stückweise von der Basisfolie so abziehbar ist, daß nacheinander die in Reihen oder Spalten angeordneten Aufnahmen 2 freigelegt werden. Mit einem Zahnwurzelkanalaufbereitungsinstrument können dann die freiliegende Markierungsscheibe 3 sowie die darunter liegende Basisfolie 1 in der Aufnahme 2 durchstoßen werden, bis die Markierungsscheibe 3 an der gewünschten Stelle am Zahnwurzelkanalaufbereitungsinstrument angeordnet ist.

## Beschreibung

Die Erfindung betrifft eine Spendervorrichtung für Markierungsscheiben zum Begrenzen der Eindringtiefe von Zahnwurzelkanalaufbereitungsinstrumenten und dergleichen.

Da Zahnwurzelkanalaufbereitungsinstrumente nur bis zu einer gewissen Tiefe in die Zahnwurzel eindringen dürfen, werden Markierungsscheiben aus beispielsweise Silicon als Stopper dazu benutzt, die zulässige Eindringtiefe zu markieren, bis zu welcher gebohrt werden darf. Diese Markierungsscheiben werden bis zu der entsprechenden Stelle auf die Zahnwurzelkanalaufbereitungsinstrumente aufgezogen.

Eine Spendervorrichtung für derartige Markierungsscheiben, die das Aufziehen der Markierungsscheiben auf ein Zahnwurzelkanalaufbereitungsinstrument erleichtern soll, ist in der DE 3 419 712 C2 beschrieben. Diese bekannte Spendervorrichtung weist eine Aufnahmekammer auf, in der die Markierungsscheiben in willkürlicher Anordnung aufgenommen sind und die mit einem Hohlraum in Verbindung steht, dessen Höhe im wesentlichen der Dicke der Markierungsscheiben entspricht, wodurch eine Vereinzelung der Markierungsscheiben möglich ist, um diese einzeln in einer bestimmten Lage an einer Öffnung der Spendervorrichtung anzuordnen, an der sie durch Aufspießen auf ein Zahnwurzelkanalaufbereitungsinstrument aufgezogen werden können.

Die der Erfindung zugrunde liegende Aufgabe besteht dem gegenüber darin, eine Spendervorrichtung der eingangs genannten Art zu schaffen, die in ihrem Aufbau einfach und daher mit geringen Kosten verbunden ist und die es insbesondere erlaubt, die Markierungsscheiben zu sterilisieren und steril aufzubewahren.

Diese Aufgabe wird gemäß der Erfindung durch eine Basisfolie aus einem Kunststoffmaterial, das eine derartige Festigkeit hat, daß die Basisfolie von einem Zahnwurzelkanalaufbereitungsinstrument durchstoßen werden kann, wobei in der Basisfolie tiefgezogene Aufnahmen für die Markierungsscheiben ausgebildet sind, derart, daß die Markierungsscheiben in einer zur Basisfolie parallelen Ebene liegend aufgenommen sind, und eine Abdeckung gelöst, die von der Basisfolie lösbar mit dieser verbunden ist.

Bei der erfindungsgemäßen Spendervorrichtung können somit die Markierungsscheiben in einer definierten Lage in ihren jeweiligen Aufnahmen aufgenommen sein, so daß durch Lösen der Abdeckung von der Basisfolie die Markierungsscheiben freigelegt werden und dadurch auf ein Zahnwurzelkanalaufbereitungsinstrument aufgezogen werden können, indem dieses eine Markierungsscheibe sowie die Basisfolie an der zugehörigen Aufnahme durchstößt, bis die Markierungsscheibe zu der gewünschten Stelle am Zahnwurzelkanalaufbereitungsinstrument aufgezogen ist.

Aufgrund ihres zweiteiligen Aufbaus ist die erfindungsgemäße Spendervorrichtung einfach und mit geringen Kosten herzustellen.

Besonders bevorzugte Ausgestaltungen und Weiterbildungen der erfindungsgemäßen Spendervorrichtung sind Gegenstand der Patentansprüche 2 bis 4.

Wenn die Abdeckung insbesondere so ausgebildet ist, daß sie die mit den Markierungsscheiben gefüllten Aufnahmen nur schrittweise beispielsweise reihenweise oder einzeln freigibt, ist in vorteilhafter Weise sichergestellt, daß die restlichen Markierungsscheiben steril bleiben.

Im folgenden werden anhand der zugehörigen Zeichnung besonders bevorzugte Ausführungsbeispiele der Erfindung näher beschrieben. Es zeigen
Fig. 1 eine auseinandergezogene perspektivische Ansicht eines ersten Ausführungsbeispiels,
Fig. 2 eine perspektivische Ansicht des in Fig. 1 dargestellten Ausführungsbeispiels im Zustand der Entnahme einer Markierungsscheibe,
Fig. 3 in einer Schnittansicht einer Aufnahme mit Markierungsscheibe, wie die Markierungsscheibe auf ein Zahnwurzelkanalaufbereitungsinstrument aufgezogen wird, und
Fig. 4 in einer perspektivischen Ansicht die Abdeckung bei einem zweiten Ausführungsbeispiel.

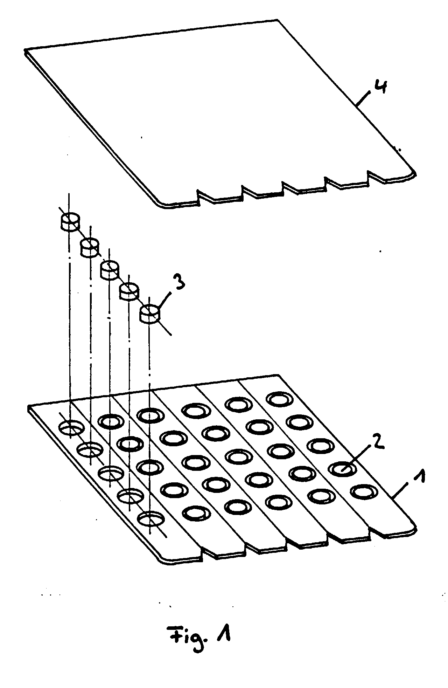

Die in Fig. 1 dargestellte Spendervorrichtung für Markierungsscheiben 3 zum Begrenzen der Eindringtiefe von Zahnwurzelkanalaufbereitungsinstrumenten umfaßt eine Basisfolie 1 aus einem Kunststoffmaterial wie beispielsweise Polystyrol, die von einem Zahlwurzelkanalaufbereitungsinstrument durchstoßen werden kann und in der tiefgezogene Aufnahmen 2 so ausgebildet sind, daß die Markierungsscheiben einzeln darin liegend aufgenommen werden können. Die Markierungsscheiben 3 liegen somit flach in einer Ebene, die parallel zur Ebene der Basisfolie 1 ist.

Eine Abdeckung. d.h. bei dem in Fig. 1 dargestellten Ausführungsbeispiel eine Abziehfolie 4 ist über der Anordnung aus der Basisfolie 1 mit den in den Aufnahmen 2 liegenden Markierungsscheiben 3 angeordnet. Die Abziehfolie 4 besteht beispielsweise aus Aluminium mit einer dünnen Versiegelungsschicht und ist durch Einwirkung von Druck und Wärme mit der Basisfolie 1 verbunden.

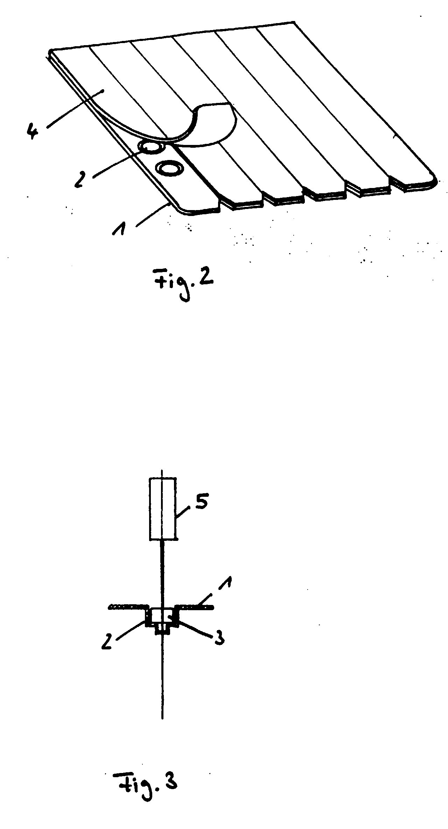

Wie es weiterhin in Fig. 1 dargestellt ist, sind die Aufnahmen 2 für die Markierungsscheiben 3 in parallelen Reihen bzw. Spalten angeordnet. Wenn in der in Fig. 2 dargestellten Weise die Abziehfolie 4 mit Abrißlinien versehen ist, die zwischen den Reihen oder Spalten der Aufnahmen 2 verlaufen, ist es möglich durch Aufreißen der Abziehfolie 4 nur längs einer Reihe oder Spalte der Aufnahmen 2 die Markierungsscheiben 3 einzeln zu entnehmen, ohne die verbleibenden Markierungsscheiben in ihren Aufnahmen 2 freizulegen, die daher steril in ihren Aufnahmen 2 gehalten bleiben.

Wie es in Fig. 2 dargestellt ist, wird das durch eine zungenartige Ausbildung der Basisfolie 1 und/oder der Abziehfolie 4 an einer Kante der Spendervorrichtung erleichtert.

Bei der Herstellung einer derartigen Spendervorrichtung wird zunächst die Basisfolie 1 tiefgezogen und mit den Aufnahmen 2 versehen, werden dann die Markierungsscheiben 3 in die Aufnahmen 2 eingegeben, was von einem Sterilisierungsvorgang begleitet sein kann, und wird anschließend die Abziehfolie 4 aufgebracht und versiegelt.

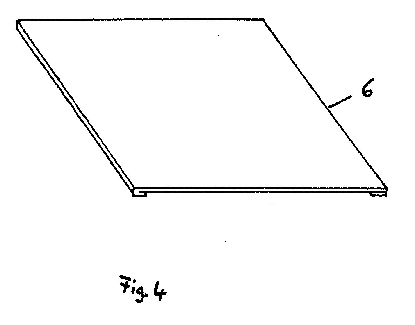

Bei der Benutzung wird die Abziehfolie 4 in der in Fig. 2 dargestellten Weise längs einer Reihe oder Spalte der Aufnahmen 2 aufgerissen und abgezogen, bis wenigstens eine Aufnahme 2 mit darin enthaltener Markierungsscheibe 3 freiliegt. Wie es in Fig. 3 dargestellt ist, können dann aufgrund der definierten Lage der Markierungsscheibe 3 mit einem Zahnwurzelkanalaufbereitungselement 5 die Markierungsscheibe 3 und die Basisfolie 1 am Boden der Aufnahme 2 durchstoßen werden und kann dadurch die Markierungsscheibe 3 auf das Zahnwurzelkanalaufbereitungsinstrument 5 bis zu der gewünschten Stelle aufgezogen werden.

Bei einer Spendervorrichtung mit dem oben beschriebenen Aufbau ist durch die definierte Lage der Markierungsscheibe 3 in der Aufnahme 2 ein Durchstoßen in der richtigen Position durch das Zahnwurzelkanalaufbereitungsinstrument 5 sichergestellt, wobei das aufgrund der Tatsache, daß das erfolgen kann, ohne die Markierungsscheibe mit der Hand zu berühren, steril möglich ist.

Fig. 4 zeigt die Abdeckung bei einem weiteren Ausführungsbeispiel. Bei dem in Fig. 4 dargestellten Ausführungsbeispiel besteht die Abdeckung aus einem Schieber 6, der nach dem Füllen der Aufnahmen 2 der Basisfolie 1 mit den Markierungsscheiben 3 über die Basisfolie 1 geschoben ist. Durch ein Verschieben des Schiebers 6 relativ zur Basisfolie 1 können dann die Aufnahmen 2 mit den darin angeordneten Markierungsscheiben 3 reihen- oder spaltenweise freigelegt werden, so daß einzelne Markierungsscheiben 3 von einem Zahnwurzelkanalaufbereitungsinstrument aufgenommen werden können. Dabei wird jeweils nur eine Reihe der Markierungsscheiben 3 freigelegt, der Rest der Markierungsscheiben 3 bleibt abgedeckt.

## Patentansprüche

1. Spendervorrichtung für Markierungsscheiben zum Begrenzen der Eindringtiefe von Zahnwurzelkanalaufbereitungsinstrumenten und dergleichen gekennzeichnet durch,
- eine Basisfolie (1) aus einem Kunststoffmaterial, das eine derartige Festigkeit hat, daß die Basisfolie (1) von einem Zahnwurzelkanalaufbereitungsinstrument durchstoßen werden kann, wobei in der Basisfolie (1) tiefgezogene Aufnahmen (2) für die Markierungsscheiben (3) ausgebildet sind, derart, daß die Markierungsscheiben (3) in einer zur Basisfolie (2) parallelen Ebene liegend aufgenommen sind, und
- eine Abdeckung (4, 6), die von der Basisfolie (1) lösbar mit dieser verbunden ist.

2. Spendervorrichtung nach Anspruch 1, dadurch gekennzeichnet, daß die Abdeckung aus einer abziehfähigen Folie (4) besteht.

3. Spendervorrichtung nach Anspruch 2, dadurch gekennzeichnet, daß die Aufnahmen (2) in der Basisfolie (1) in zueinander parallelen Reihen bzw. Spalten angeordnet sind und die Abziehfolie (4) mit parallel laufenden Abrißlinien versehen ist, die zwischen den Reihen bzw. Spalten der Aufnahmen (2) verlaufen.

4. Spendervorrichtung nach Anspruch 1, dadurch gekenzeichnet, daß die Abdeckung aus einem Schieber (6) besteht, der relativ zur Basisfolie (1) verschiebbar ist.
